# EUROPEAN PATENT APPLICATION

(11) **EP 2 026 308 A1**
(43) Date of publication of application: **18.02.2009**
(21) Application number: 07113823.4
(22) Date of filing: 03.08.2007
(51) Int. Cl.: G08B 21/02, G08B 21/08, B63C 9/00, G01S 5/02

(54) **Automatic multi-user system for localization, alarm and personal emergency, operating in multi-standard mode in aquatic environment**

(71) Applicant: Insigna Security Srl, 20131 Milano (IT)
(72) Inventor: Valverde, Massimo, 20149 Milano (IT)
(74) Representative: Serravalle, Marco

(57) **Abstract**

The present invention relates to an automatic system for localization, alarm and personal emergency, in aquatic environment operating in multi-standard mode, wherein the system comprises a remote control base and a remote sensing unit, wherein the sensing unit comprises a GPRS/GSM modem (with a SIM card), a WiFi modem (standard 802.11) and a WiMAX modem (standard 802.16) and wherein the sensing unit is waterproof.

The present invention also relates to a method for the use of the above defined automatic system, wherein the sensing unit measures at regular intervals the position and the other parameters related to the sensor(s) present in the unit, and transmits these data to a central unit which is connected to the sensing unit through a WEB connection established through the GSM-GPRS/EDGE network, but also, in the absence of this signal, through other available communication network, such as UMTS, WiFi and WiMAX; wherein the central unit is programmed in such a way that, when the values of the measured parameters overcome a threshold value, an alarm is activated.

## Description

The present invention relates to an automatic multi-user system for localization, alarm and personal emergency, operating in multi-standard mode.

Personal alarm systems operated in remote mode are well known in the art. US2007/0030156 discloses a personal alarm system including a monitoring base station and remote sensing units in two-way radio communication. The positioning of the user is performed using the Global Positioning System (GPS) and the transmission of the information takes place through a radio transmitter. However, GPS does not allow positioning of the user in indoor situations, and the use of a radio transmitter requires high power when moving far from the monitoring base.

The present invention relates to an automatic multi-user system which allows to localize and georefer in a continuous way and in any geographic area (national or international) both a single user and a group of users. It is possible to visualize the track on a digital map, on a projection of a portion of earth's surface obtained by a satellite, or a mixture of both.

The multi-user system of the present invention comprises a remote sensing unit and a remote control base. The sensing unit comprises: a GPRS/GSM modem (with a SIM card) and preferably a WiFi modem (standard 802.11) and a WiMAX modem (standard 802.16). Furthermore, because of the use in aquatic environment, the sensing unit is at least water-resistant, preferably water-proof.

The sensing unit is therefore able to maintain a communication with the remote control base through the WEB, in a machine-to-machine connection by a data only communication system, using when necessary the DTM protocol and/or ASCI or GSM-R protocols.

This communication system operates through the GSM-GPRS/EDGE network, but also, in the absence of this signal, through other available communication network, such as UMTS, WiFi and WiMAX.

Furthermore, in a preferred embodiment of the present invention, the sensing unit is able to detect other signals such as GPS and Digital Terrestrial Television (DTT). The possibility of detecting these systems allows the determination of the position in a large variety of conditions. In fact, when the user is in a closed ambient, there is no GPS signal and the positioning by GPS cannot take place. For example, the use of DTT signal allows the determination of the position by triangulation of the distance with two DTT cells. Once the position of all DTT cells are known, the triangulation between two or three different cells allows a precise determination of the position of the user.

Depending on the intended use, it is also possible to introduce in the sensing unit a variety of sensors which might be of use in the determination of potential alarms or hazards.

For example, it is possible to introduce in the sensing unit one or more of the following sensors: temperature, pressure, humidity, acceleration, light, etc.

The sensing unit will transfer all the measured data (position plus data from all sensors) to the remote control unit at regular intervals. The interval will be preferably not longer than 1 min, more preferably not longer than 30 seconds, most preferably not longer than 20 seconds. An example of a suitable interval is for example 15 seconds.

Although the sensing unit has a variety of different means for communicating with the remote control unit, it is possible that, for a short period, the sensing unit is in a "dark" area, i.e. an area not covered by any communication network. In this case, the sensing unit has a memory which allows storage of the data. Preferably the memory of the sensing unit is able to store data for at least 4 h, more preferably for at least 12 h, most preferably for at least 24 h.

Once the connection with the central unit is re-established, the sensing unit will transfer all stored data to the central unit, allowing a complete reconstruction of the positioning of the user at any time.

In a preferred embodiment of the invention, the different sensors present in the sensing unit are preferably used for the determination of alarm conditions in aquatic conditions, like for example bathing, sailing, windsurfing, snorkelling and scuba-diving.

For example, when the sensing unit is positioned on a boat, the positioning system is used for monitoring any type of traffic. The position of each user (sensing unit) is received by the central unit. The central unit elaborates this information and returns to each individual user the position of any other user present in the surrounding area. The sensing unit transfers these data to a screen, for example an LCD screen, to give to the user a virtual radar of the waters where the user is sailing. Thus, the sensing unit according to the invention is also provided with a screen for visualizing information received from the central unit.

The positioning system according to the present invention for use on boats is preferably provided with a set of sensors to collect weather information (temperature, pressure, humidity, wind, sea/lake conditions). The remote central unit, by collecting all data from all users, will be able to elaborate these data and to provide each user with weather forecast, e.g. within an area of 20-30 km from the position of the boat.

The sensing unit for use on a boat, preferably also includes sensors for the determination of pitching, roll, speed and leeway of the boat. The central unit, starting from these data will calculate the strength of the sea/lake.

In another preferred embodiment of the invention the sensing unit makes use of a proximity tag. More specifically, the sensing unit detects the proximity of a tag and, when the distance between unit and tag overcomes a prefixed value, the central unit activates an alarm procedure. This type of configuration could be used for sailors or windsurfers. For example, if the windsurfer has a proximity tag on the windsurf, the sensing unit will loose contact with the proximity tag only if the user falls from the windsurf. The remote central unit will receive this information from the sensing unit. This is not an alarm yet, since it is normal for a windsurfer to fall from the windsurf. However, if the sensing unit does not report within a prefixed time that the proximity between tag and sensing unit has been re-established, the central unit will activate an alarm, because this situation implies that the windsurfer for some reason (injury, illness, etc.) is not able to return on the windsurf and requires help.

Another very useful application of the aquatic multi-user system of the present application is for scuba divers and snorkelers. In this case the sensing unit is a waterproof unit, which is able to resist up to a depth of 750 meters, and a shock resistant unit (up to 30G).

In another preferred embodiment, the present invention relates to a method for the use of an automatic system for localization, alarm and personal emergency, in aquatic environment, operating in multi-standard mode, wherein the system comprises a remote sensing unit and a remote control base, wherein the sensing unit measures at regular intervals the position and the other parameters related to the sensor present in the unit, and transmits these data to a central unit which is connected to the sensing unit through a WEB connection established through the GSM-GPRS/EDGE network, but also, in the absence of this signal, through another available communication network, such as UMTS, WiFi and WiMAX; wherein the central unit is programmed in such a way that, when the values of the measured parameters overcome a threshold value, an alarm is activated.

In a preferred embodiment of the invention, the central unit is programmed with at least two different emergency procedures. A first emergency procedure will be activated automatically, for situations which always require intervention of emergency unit.

If the alarm is relating to a situation which does not always require intervention of emergency unit, then it will require the intervention of a human operator. Thus, it will be up to the operator to ascertain whether it is necessary to alert the emergency unit.

In a preferred embodiment, the unit is also provided with a battery, preferably a Ni-Mn battery, which is rechargeable by electromagnetic induction.

An important characteristic of the system of the present invention is the "floating system", i.e. a system which brings to the surface of the see/lake the transmitter in case of alarm and allows transmission of the alarm signal. In fact, the signal of GSM, or any other transmission network is absent when reaching a depth of a few meters under water. Thus, the sensing unit will accumulate the information from the different sensors and send them to the central unit when the user will return to the surface. However, when a certain situation occurs, the sensing unit will activate the procedure to bring the unit to the surface through activation of the floating system.

The floating system is a conventional system comprising a float and a mean for inflating a float to which the sensing unit is connected. Once the sensing unit has reached the surface of the water, it will send to the central unit all information available concerning the period during which the operator remained under water at a level which did not allow transmission of data.

The system for inflating the float is one of the systems known in the art. For example, the sensing unit, when a certain type of condition is reached (e.g. acceleration higher than a prefixed value, time below a prefixed depth higher than a prefixed value, depth lower than a prefixed value) the sensing unit activates a chemical reaction which produces gas. The gas produced in the chemical reaction is used for inflating the float. The sensing unit, once reached the surface, sends to the central unit all data collected during dive, and optionally activates a vocal system which is able to connect to emergency numbers directly and activate an alarm.

In a further preferred embodiment, the sensing unit is also provided with a safety system to avoid any non authorized access to the unit. For example, the system might foresee one or more of these procedures, in case of non authorized access to the memory data: block of the recharge of the battery; alarm to the central unit; destruction of the unit itself. In a preferred embodiment, the safety system becomes more severe, when the number of attempt of intrusion increase.

After at least two dives, the system will have a profile of the diver and fix parameters for defining conditions which might require intervention of the system. The most evident alarm situation is when a snorkeler remains under water for more than a fix period of time. This indicates that the person has had a serious problem and even the quickest aid is unlikely to save his or her life. However, the system of the present invention would allow a very quick recover of the corp.

It is apparent from the description given above that the system of the present invention represents an important improvement over existing systems for localization, alarm and personal emergency in the domestic and road environment, as well as woodlands and mountains. The present system also fulfils the requirements of the incoming European Emergency Number 112, making it possible to largely improve the time and the effectiveness of the relief or rescue effort after any emergency.

## Claims

1. Sensing unit for use in an automatic multi-user system for localization, alarm and personal emergency, operating in multi-standard mode, wherein the sensing unit comprises a GPRS/GSM modem (with a SIM card) and preferably a WiFi modem (standard 802.11) and a WiMAX modem (standard 802.16) and wherein the sensing unit is waterproof.

2. Sensing unit according to claim 1 wherein the sensing unit is able to detect other signals such as GPS and Digital Terrestrial Television (DTT).

3. Sensing unit for use on a boat according to claims 1-2, further comprising a set of sensors to collect weather information.

4. Sensing unit according to claim 3, wherein the unit is also provided with a screen for visualizing information received from the central unit.

5. Sensing unit for use on a snorkeler or a scuba diver according to claims 1-2, wherein the unit is connected to a floating system comprising a float and a system to inflate the float.

6. Automatic system for localization, alarm and personal emergency, in aquatic environment operating in multi-standard mode, wherein the system comprises a remote control base and a remote sensing unit according to claims 1-5.

7. Automatic system according to claim 6 wherein the sensing unit transfers all the measured data (position plus data from all sensors) to the remote control unit at regular intervals.

8. Automatic system according to claims 6 or 7 wherein the system is used for monitoring divers, i.e. scuba divers or snorkelers.

9. Automatic system according to claims 6 or 7 wherein the system is used for monitoring wind surfers or sailors.

10. Method for the use of the automatic system of claims 6-9 wherein the sensing unit measures at regular intervals the position and the other parameters related to the sensors present in the unit, and transmits these data to a central unit which is connected to the sensing unit through a WEB connection established through the GSM-GPRS/EDGE network, but also, in the absence of this signal, through other available communication network, such as UMTS, WiFi and WiMAX; wherein the central unit is programmed in such a way that, when the values of the measured parameters overcome a threshold value, an alarm is activated.
